**Europäisches Patentamt**

(19) **European Patent Office**

**Office européen des brevets**

(11) Veroffentlichungsnummer: **0 136 409**
**A2**

(12) # EUROPÄISCHE PATENTANMELDUNG

(21) Anmeldenummer: **84107231.7**

(51) Int. Cl.⁴: **G 06 F 3/023**

(22) Anmeldetag: **23.06.84**

(30) Priorität: **01.09.83 DE 3331520**

(43) Veröffentlichungstag der Anmeldung:
**10.04.85 Patentblatt 85/15**

(84) Benannte Vertragsstaaten:
**AT CH DE LI**

(71) Anmelder: **Blaupunkt-Werke GmbH**
**Robert-Bosch-Strasse 200**
**D-3200 Hildesheim(DE)**

(72) Erfinder: **Hoffmann, Heinz, Ing.-grad.**
**Hinterm Kirchdorf 31**
**D-3200 Hildesheim-Sorsum(DE)**

(72) Erfinder: **Altmann, Albrecht, Ing.-grad.**
**Königsberger Strasse 2**
**D-3221 Sibbesse(DE)**

(74) Vertreter: **Eilers, Norbert, Dipl.-Phys.**
**Blaupunkt-Werke GmbH Robert-Bosch-Strasse 200**
**D-3200 Hildesheim(DE)**

(54) **Verfahren zum Erstellen von Bildschirmtext (Btx)-Seiten und Eingabeeinrichtung dazu.**

(57) Bei der Erstellung von Bildschirmtext-Seiten werden über eine Tastatur mit alphanumerischen Zeichen auch Graphik-Zeichen wie folgt eingegeben: das graphische Zeichen wird in einer Tabelle lokalisiert; das am selben Platz in einer anderen Tabelle (für die alphanumerischen Zeichen) stehende alphanumerische Zeichen wird dann über die Tastatur eingegeben. Somit ist jedem graphischen Zeichen ein alphanumerisches Zeichen für die Eingabe zugeordnet. Die Ermittlung des jeweiligen alphanumerischen Zeichens ist aber aufwendig und umständlich.

Die Erfindung verzichtet auf diese Zuordnung und "definiert" die Zeichen aus den Tabellen "Schrägmosaik" und "Liniengraphik" durch übersichtlich gewählte Markierungspunkte. Das für die Zeichendarstellung genormte Zeichenfeld läßt sich in zwölf Markierungspunkte unterteilen, die herangezogen werden, um das jeweilige graphische Symbol zu definieren. Auf der Eingabeeinheit sind die zwölf Markierungspunkte durch entsprechend örtlich angeordnete Tasten "dargestellt", die zur Eingabe des graphischen Zeichens betätigt werden wobei für jedes Zeichen drei Tasten zu betätigen sind.

Croydon Printing Company Ltd.

0136409

Verfahren zum Erstellen von Bildschirmtext (Btx)-
Seiten und Eingabeeinrichtung dazu

Die Erfindung betrifft ein Verfahren zum Erstellen von Bildschirmtext (Btx)-Seiten unter Verwendung der in den Zeichentabellen für "Schrägmosaik" und "Liniengraphik" enthaltenen
Zeichen, mit einer Eingabeeinheit und einer Tastatur, deren
Tasten zum Zwecke der Eingabe eines Zeichens betätigt werden.
Außerdem befaßt sich die Erfindung mit der Eingabeeinheit
zur Durchführung des Verfahrens.

Eine bedeutsame zusätzliche Anwendung des in fast jedem Haushalt befindlichen Fernsehgerätes ist durch den als Bildschirmtext bezeichneten Informationsdienst gegeben.

Beim Bildschirmtext - abgekürzt auch als Btx bezeichnet -
handelt es sich um ein Verfahren, bei dem der Benutzer mit
Hilfe des postalischen Fernsprechnetzes Textinformationen
und Graphiken von einer Btx-Zentrale abrufen und auf dem
Bildschirm seines Fernsehgerätes darstellen lassen kann.

Neben dem erforderlichen Fernsprechanschluß benötigt der
Bildschirmtext-Teilnehmer ein zwischen Fernsehgerät und
Fernsprechnetz installiertes sogenanntes Modem (zum Modulieren und Demodulieren) sowie einen Decoder. Letzterer
speichert die empfangenen Informationen und wandelt sie
in stehende Fernsehbilder um, die man als Bildschirmtext-
Seiten bezeichnet.

Damit der Bildschirmtext-Teilnehmer das Informationsangebot
nutzen kann, müssen zuvor natürlich die Bildschirmtext-
Seiten von den Anbietern fertig erstellt werden und über
die Btx-Zentrale (bzw. über einen Zentralcomputer) abrufbereit sein.

Der Teilnehmer und die Btx-Zentrale können sich dann im
Dialog in einer einfachen Frage und Antwortform "verständigen", so daß der Teilnehmer die spezielle von ihm gewünschte
Information erhält.

Das Erstellen von Bildschirmtext-Seiten durch einen Anbieter - in Frage kommen beispielsweise große Warenhäuser,
deren Sortiment der Bildschirmtext-Teilnehmer auf seinem
Fernsehgerät darstellen lassen kann - ist vor allem dann sehr
aufwendig und zeitraubend, wenn die Bildschirmtext-Seite
neben einem Text auch noch graphische Darstellungen enthalten soll.

Das Editieren, also das Eingeben oder Ändern einer Bildschirmtext-Seite, erfolgt an einem Editierplatz mittels der Tastatur einer Eingabeeinheit. Neben einem Decoder und weiteren
benötigten Geräten steht am Editierplatz auch ein Monitor
zur Verfügung, um den Aufbau einer Bildschirmtext-Seite optisch verfolgen und eventuelle Korrekturen vornehmen zu
können.

Die Tastatur der Eingabeeinheit entspricht derjenigen einer
Schreibmaschine. Bei Betätigung etwa der Taste "A" erscheint
dieser Buchstabe sofort auf dem Bildschirm des Monitors, so
daß sich Textinformationen mit alphanumerischen Zeichen
(Buchstaben und Ziffern) leicht erstellen lassen.

Für den Aufbau einer Bildschirmtext-Seite werden daneben
aber auch graphische Zeichen benötigt, um Schaubilder, Zeichnungen oder Graphiken auf dem Bildschirm darstellen zu können.

Die Eingabe der entsprechenden graphischen Zeichen mittels
einer alphanumerischen Tastatur bereitet in der Praxis
Schwierigkeiten und ist bisher in der Weise erfolgt, daß
jedem Graphikzeichen ein alphanumerisches Zeichen bzw.
die Taste des zugehörigen alphanumerischen Zeichens zugeordnet wird.

Zur Standardisierung sind alle Zeichen bekanntlich genormt
und in Tabellen mit bestimmten Zeichensätzen zusammengefaßt. Grundsätzlich wird dabei unterschieden zwischen
alphanumerischen Zeichen und graphischen Zeichen, die in
den genormten bekannten Tabellen GO, G2 und G1, G3 als
Zeichensätze wiedergegeben sind.

Wenn nun beim Erstellen einer Bildschirmtext-Seite eine
graphische Darstellung aufgebaut werden soll, sind folgende
Schritte für die Bedienungsperson erforderlich: zunächst
wird das gewünschte Symbol in einer der genormten Tabellen
aufgesucht. Dann muß festgehalten werden, in welcher Zeile
und Reihe der Tabelle sich das bestimmte graphische Symbol
befindet. Ist dies geschehen, muß die Bedienungsperson in
eine weitere Tabelle gehen und dort feststellen, welches
alphanumerisches Zeichen dem gewählten graphischen Symbol zugeordnet ist. Nachdem zuvor die Betriebsart der Eingabeeinrichtung auf graphische Zeichen umgeschaltet worden
ist, kann nun diejenige Taste gedrückt werden, welche das
alphanumerische Zeichen trägt, das den graphischen Zeichen
zugeordnet ist. Wird ein anderes graphisches Zeichen gewünscht, muß der oben beschriebene Vorgang - Zuordnung des
bestimmten Zeichens zu einem alphanumerischen Zeichen -
wiederholt werden.

In der Praxis hat sich diese Art der Bildschirmeingabe als
sehr zeitraubend und damit als kostenintensiv erwiesen.

Zwar wird es der Bedienungsperson mit einigem Geschick gelingen, sich bei mehreren graphischen Zeichen die entsprechenden Buchstaben zu merken, die er dann eingeben muß,
dies gilt jedoch nur für einfache graphische Zeichen.

Bei den in den Tabellen für "Schrägmosaik" und "Liniengraphik" angegebenen "schwierigen" Zeichen ist die Zuordnung zu den jeweiligen Buchstaben und Ziffern nur anhand
des oben beschriebenen Weges durch Vergleich der Tabellen
möglich.

Hier greift die Erfindung ein, der die Aufgabe zugrunde
liegt, das Erstellen einer Bildschirmtext-Seite bei Verwendung der Zeichensätze aus den Tabellen "Schrägmosaik"
und "Liniengraphik" für die Bedienungsperson zu vereinfachen und zu beschleunigen. Außerdem soll durch die Erfindung eine Eingabeeinrichtung geschaffen werden, mit
der eine Durchführung des Verfahrens zur vereinfachten
Eingabe möglich ist.

Verfahrensmäßig wird die Aufgabe bei dem im Oberbegriff
des Patentanspruchs 1 vorausgesetzten Verfahren dadurch
gelöst, daß jedes Zeichen aus den Tabellen "Schrägmosaik"
und "Liniengraphik" aus mindestens drei einzelnen Tasteneingaben bzw. Tastenbetätigungen zusammengesetzt und aufgebaut wird.

Bei der Erfindung muß die Bedienungsperson also dreimal
nacheinander bestimmte Tasten betätigen, um auf dem Bildschirm ein graphisches Zeichen zu erzeugen ( es müssen übrigens nicht immer unterschiedliche Tasten betätigt werden,
möglich ist auch, daß eine Taste mehrfach betätigt wird).

Auf den ersten Blick scheint das erfindungsgemäße Verfahren zwar umständlicher als das bekannte Eingabeverfahren zu sein, wo ja nur eine Taste betätigt werden muß. Bei näherer Betrachtung ergibt sich jedoch, daß die Erfindung eine entscheidend schnellere und einfachere Möglichkeit für das Eingeben von Graphik- und Linienzeichen schafft.

Der Erfindung liegt nämlich der Gedanke zugrunde, die zur Rede stehenden Zeichen nicht durch ein zugeordnetes alphanumerisches Zeichen, sondern durch die Tastenbetätigungen selbst zu definieren, und zwar in der Weise, daß die örtliche Lage der auf der Eingabeeinheit zu betätigenden Tasten das jeweilige Zeichen "beschreibt".

So lassen sich beispielsweise die Zeichen aus der Tabelle "Schrägmosaik" jeweils durch drei Eckpunkte festlegen und definieren. Die Bedienungsperson braucht dann lediglich die Eckpunkte des ihm bekannten Zeichens auf die Tasten zu übertragen, wobei diejenigen drei Tasten betätigt werden, deren örtliche Lage jeweils der örtlichen Lage der genannten Eckpunkte entspricht. Es ist also nicht mehr erforderlich, zunächst das gewünschte Zeichen in der Graphiktabelle aufzusuchen und danach das am selben Platz in der alphanumerischen Tabelle stehende Zeichen über die Tastatur einzugeben.

In einer Vielzahl von mit mehreren Personen durchgeführten Versuchen hat sich bestätigt, daß das erfindungsgemäße Verfahren zu einer erheblichen Zeitersparnis beim Erstellen einer Bildschirmtext-Seite führt. Dies ist auf den besonderen Vorteil der Erfindung zurückzuführen, die es der Bedienungsperson erlaubt, ein ihm vorgelegtes Zeichen optisch sofort anhand der drei Eckpunkte zu definieren und entsprechend einzugeben. Man braucht sich also nicht mehr
darum zu kümmern, an welchem Platz das jeweilige graphische
Zeichen in der Tabelle steht, und welches alphanumerisches
Zeichen diesem Tabellenplatz in einer anderen Tabelle zugeordnet ist.

Nach der Norm erfolgt die graphische Darstellung eines Zeichens auf dem Bildschirm innerhalb eines Zeichenfeldes mit
zwei mal drei senkrechten Feldern bzw. Segmenten. Die dadurch
gebildeten insgesamt zwölf Eck- bzw. Kreuzpunkte lassen sich
als Markierungspunkte im Sinne der Erfindung verwenden. Eine gemäß der Erfindung ausgebildete Eingabeeinheit zur Durchführung des beschriebenen Verfahrens besitzt daher einen
aus zwölf Tasten bestehenden Tastenblock, von denen jede
Taste einem der genannten Markierungspunkte entspricht.
Zweckmäßigerweise kann hier der sogenannte Ziffernblock verwendet werden, wie er bei bekannten Eingabeeinheiten an
sich schon für die Zifferneingabe vorgesehen ist. Ein solcher Tastenblock besteht aus vier waagerechten Reihen mit
jeweils drei Tasten, so daß sich insgesamt die hier erforderlichen zwölf Tasten ergeben.

Andere vorteilhafte Weiterbildungen und Ausgestaltungen
der Erfindung sind in den Unteransprüchen angegeben und in
der Zeichnung dargestellt.

Zum besseren Verständnis der Erfindung wird diese nachfolgend anhand der Zeichnung näher erläutert. Es zeigen:

    Fig. 1    ein schematisches Blockschaltbild eines
                  Editierplatzes,

    Fig. 2    die perspektivische Ansicht einer Eingabeeinheit und eines Monitors zur Dar-
                  stellung der eingegebenen Zeichen,

Fig. 3    ein Zeichenfeld mit sechs Segmenten,

Fig. 4    ein Zeichenfeld gemäß Fig. 3, wobei die Eck- bzw. Kreuzpunkte markiert sind,

Fig. 5    einen Tastenblock mit zwölf Tasten,

Fig. 6    das Beispiel eines Zeichens aus der Tabelle "Schrägmosaik",

Fig. 7    einen Tastenblock gemäß Fig. 5, wobei diejenigen Tasten markiert sind, die zur Eingabe des Zeichens gemäß Fig. 6 betätigt werden,

Fig. 8-9    jeweils eine genormte Tabelle mit mehreren Zeichensätzen,

Fig. 10    eine weitere Tabelle, mit denen den Graphikzeichen alphanumerische Zeichen zugeordnet werden,

Fig. 11-16 Tabellen, in denen angegeben ist, in welcher Weise die Zeichen durch drei Tasteneingaben über den Tastenblock gemäß Fig. 5 definiert sind, und

Fig. 17    ein schematisches Flußdiagramm zur Erläuterung der Erfindung.

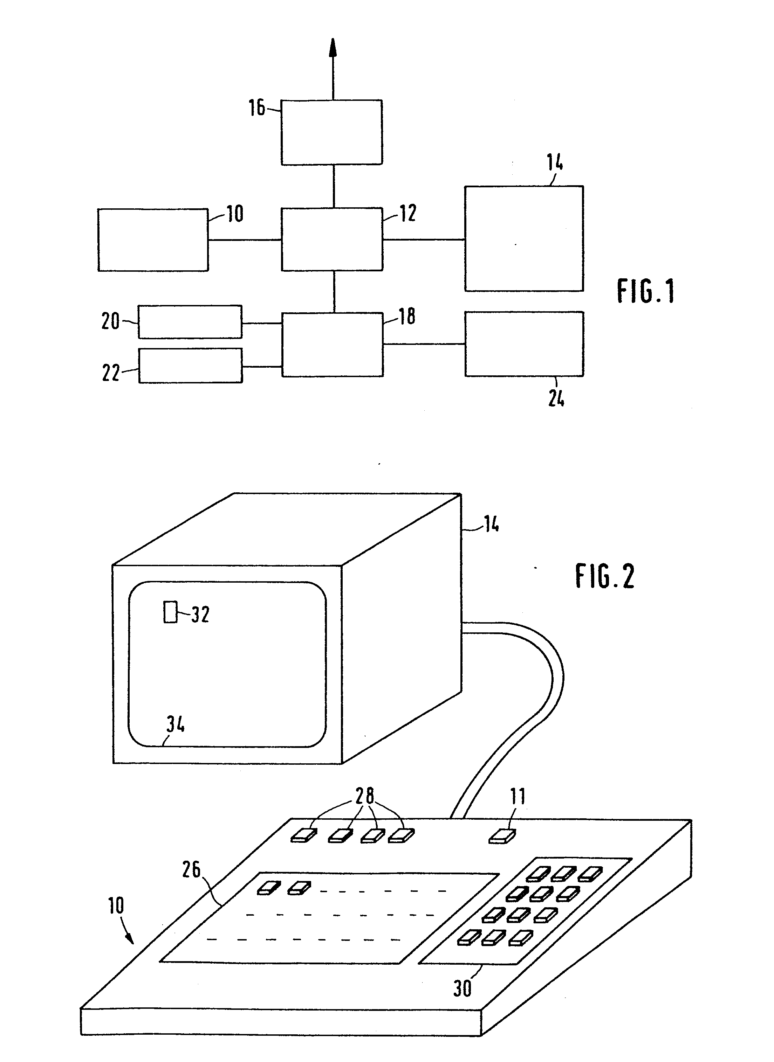

Der in Fig. 1 in Form eines Blockschaltbildes zeichnersich dargestellte Editierplatz zum Erstellen von Bildschirmtext-Seiten umfaßt eine Eingabeeinheit 10, die über einen Decoder 12 mit einem Monitor 14 verbunden ist, auf dem die eingegebenen Zeichen sichtbar sind.

Über ein Modem 16 ist ein Anschluß an das Telefon-Netz möglich, um z.B. fertig erstellte Bildschirm-Seiten in einer
Bildschirmtext-Zentrale zum Abruf durch Teilnehmer am Bildschirmtext-Verfahren abzulegen. Das Modem 16 wird also nur
bei On-Line Betrieb benötigt.

Ferner umfaßt der Editierplatz gemäß Fig. 1 noch einen mit
dem Decoder 12 verbundenen Computer 18 mit zwei Laufwerken
20 und 22. Ein zweiter Monitor 24 ist mit dem Computer 18
verbunden. Über in die Laufwerke 20 bzw. 22 einlegbare Disketten lassen sich gespeicherte Bildschirmtext-Seiten abrufen und auf einem Monitor darstellen. Außerdem können
die über die Eingabeeinheit 10 erstellten Bildschirmtext-
-Seiten auf den Disketten gespeichert werden.

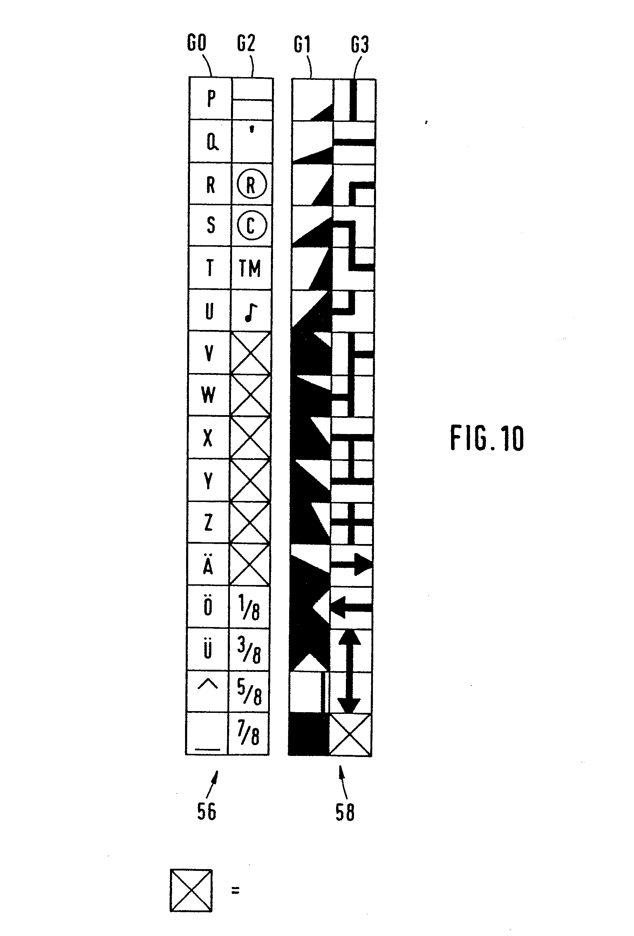

In Fig. 2 ist in einer perspektivischen Ansicht die Eingabeeinheit 10 dargestellt, die in an sich bekannter Weise mit
einem Tastenfeld 26 (nur schematisch angedeutet) für alphanumerische Zeichen (Buchstaben, Ziffern und Sonderzeichen)
versehen ist. Ferner besitzt die Eingabeeinheit 10 Auswahltasten 28, mit denen eine für die Eingabe jeweils vorgesehene
genormte Zeichen-Tabelle ausgewählt werden kann. Wenn beispielsweise die bekannte Tabelle GO gewählt wird (vergleiche
Fig. 10), ist der Grundzustand eingeschaltet und die Eingabeeinheit 10 arbeitet im Alpha-Modus. In diesem Fall kann das
Tastenfeld 26 wie von einer Schreibmaschine her bekannt, benutzt werden. Wenn beispielsweise die Taste mit den Buchstaben "P" betätigt wird, erscheint dieser Buchstabe auf dem
Bildschirm 34 des Monitors 14.

In Fig. 2 ist oben links auf dem Bildschirm 34 eine Schreibmarke 32 (sogenannter "Cursor") zu erkennen. Diese Schreibmarke 32 hat die Größe eines Zeichens und dient in bekannter Weise zur Markierung der jeweiligen Schreibposition. Die Schreibmarke 32 zeigt also an, wo das nächste Zeichen eingegeben wird.

Die Eingabeeinheit 10 umfaßt gemäß Fig. 2 noch einen Umschalter 11, mit welchem die Eingabeeinheit auf einen Betriebsmodus eingestellt werden kann, bei dem ein Tastenblock 30 im Sinne der Erfindung für die Eingabe von Zeichen aus den Tabellen "Schrägmosaik" und "Liniengraphik" herangezogen wird, was nachfolgend noch näher erläutert ist.

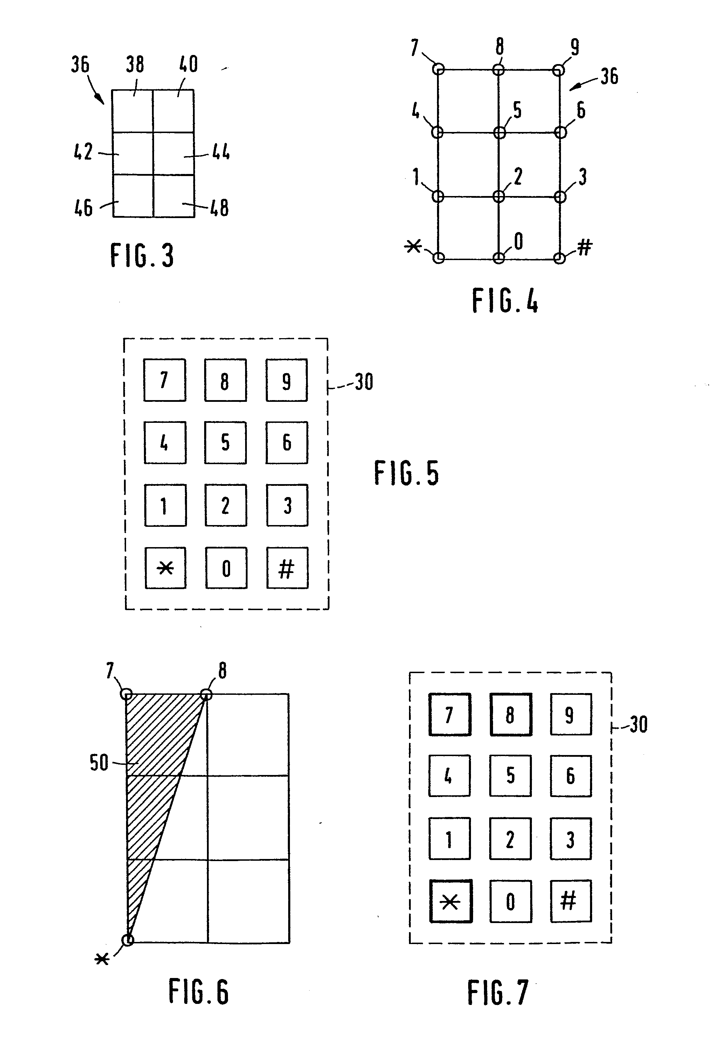

Anhand der Figuren 3 - 7 wird nachfolgend der der Erfindung zugrunde liegende Gedanke erläutert. Fig. 3 zeigt das beim Bildschirmtext übliche Zeichenfeld 36, welches ~~aus~~ sich in zwei senkrechten Dreierreihen ~~gebildet ist und somit~~ insgesamt sechs Segmente 38, 40, 42, 44, 46 und 48 ~~umfaßt~~ aufteilen läßt. Durch das Zeichenfeld 36 ist die maximale Größe des jeweiligen Zeichens bestimmt.

Gemäß Fig. 4 lassen sich bei dem Zeichenfeld 36 nun insgesamt zwölf Eck- bzw. Kreuzpunkte definieren, die bei der Erfindung als Markierungspunkte 1, 2, 3, 4, 5, 6 , 7, 8, 9, 0, * und # herangezogen werden.

Die voranstehend gewählten Bezeichnungen der Markierungspunkte entsprechen dem üblichen Standard eines Tastenblockes 30 gemäß Fig. 5, so daß dieser an sich bekannte Tastenblock in vorteilhafter Weise bei der Erfindung verwendet werden kann.

Die überraschende und neuartige Maßnahme gemäß der Erfindung schafft gemäß den Figuren 6 und 7 eine einfache Möglichkeit einer übersichtlichen Definition von Graphik- und Linienzeichen und damit eine vereinfachte Eingabe durch die Bedienungsperson.

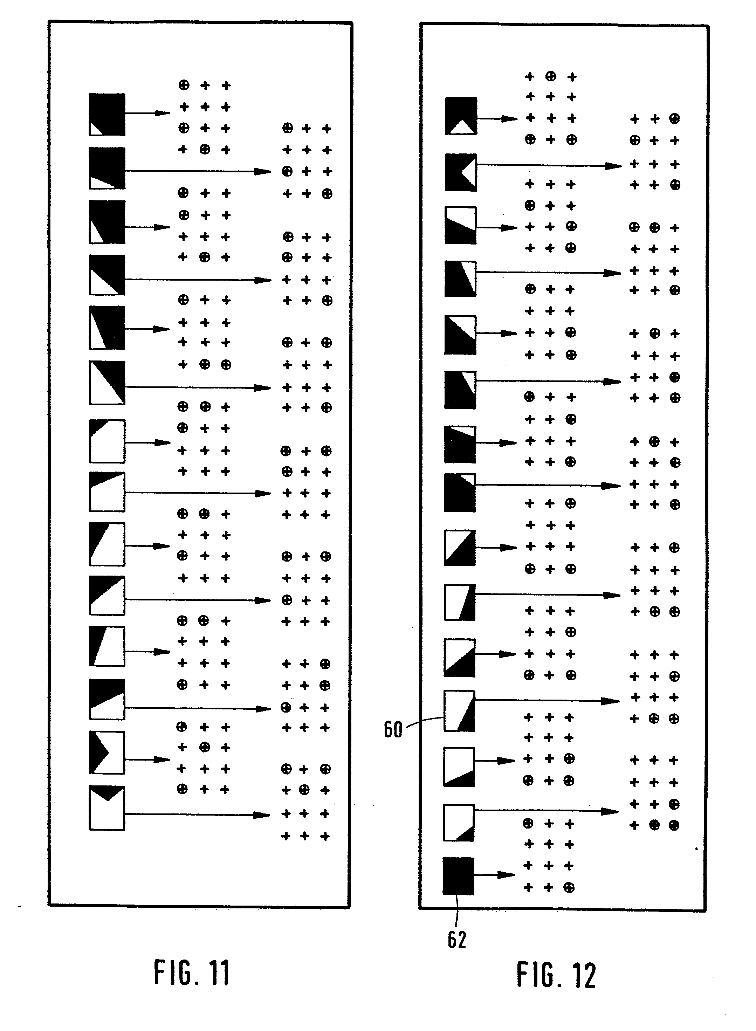

In Fig. 6 ist als Beispiel ein bekanntes Zeichen 50 aus der Tabelle "Schrägmosaik" (vergl. Fig. 11, linke Spalte, 11. Zeichen von oben) dargestellt. Dieses Zeichen läßt sich durch seine Eckpunkte markieren. Wie in Fig. 7 durch die mit dicken Linien hervorgehobenen Tasten verdeutlicht ist, werden zur Darstellung des Zeichens 50 die Tasten "7", "8", und "*" betätigt. Die genannten Tasten des Tastenblocks 30 können übrigens in beliebiger Reihenfolge betätigt werden.

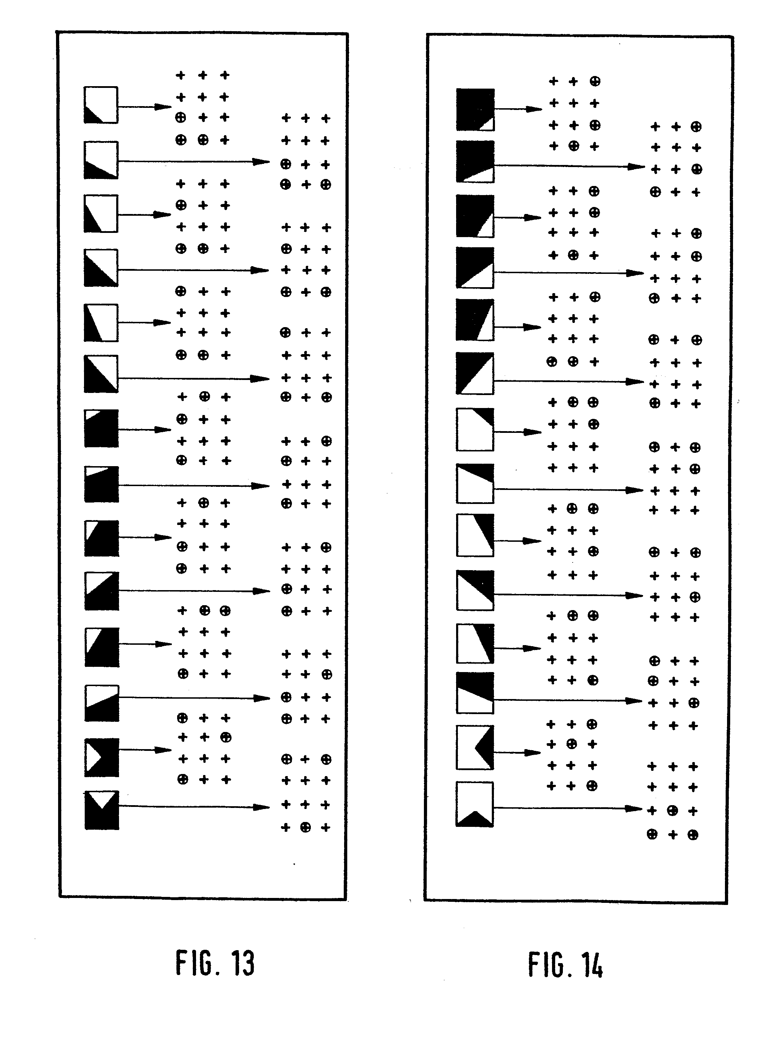

Die Bedienungsperson "schreibt" also bei der Eingabe des Zeichens 50 sozusagen dessen Eckpunkte nach. Auf diese Weise lassen sich - was weiter unten noch anhand der Figuren 11 - 16 näher erläutert wird - die Graphik- und Linienzeichen auf einfache Weise unmittelbar umsetzen, ohne daß man mit Tabellen arbeitet, um bei einer alphanumerischen Eingabe zu ermitteln, welches alphanumerisches Zeichen dem jeweiligen Graphikzeichen zugeordnet ist.

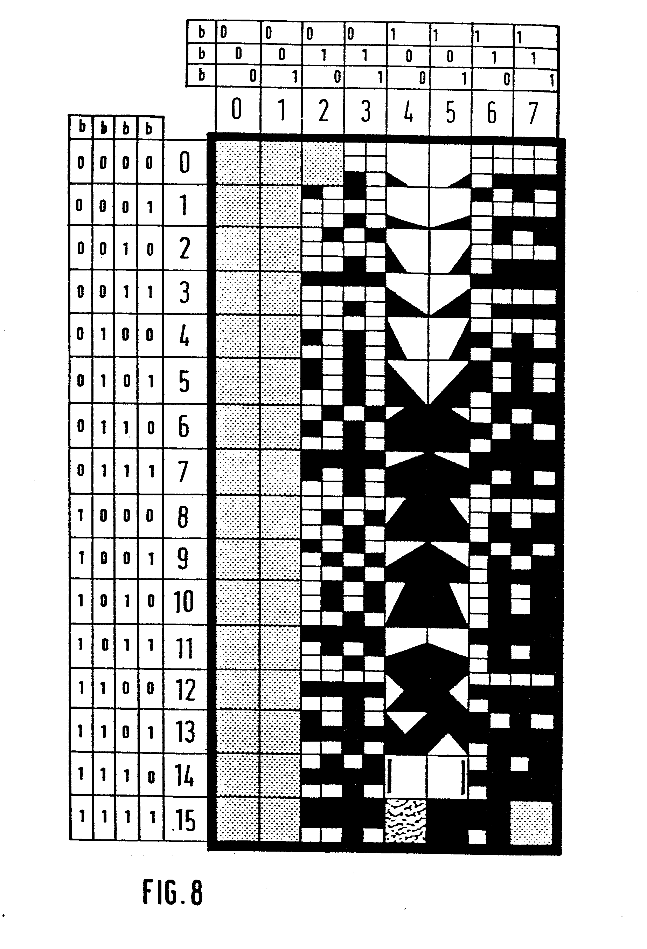

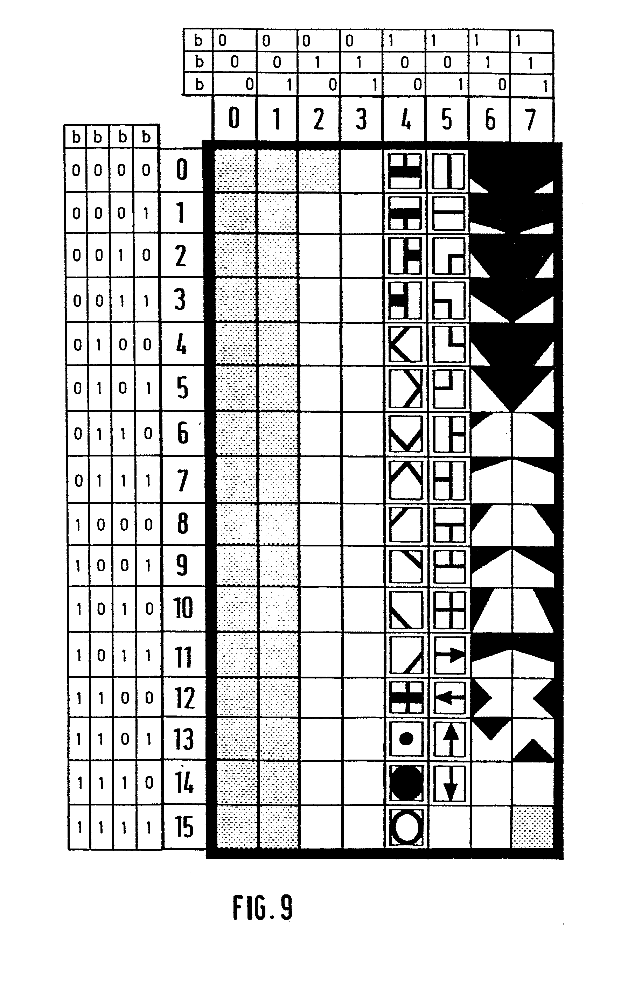

In den Figuren 8 und 9 sind zur Veranschaulichung genormte Zeichenvorräte in Form von Tabellen dargestellt. Die vier linken Spalten am linken Rand und die drei oberen Spalten am oberen Rand können hier außer Betracht bleiben. In Fig. 8 sind im Rahmen der Erfindung die beiden senkrechten Spalten "4" und "5" von Bedeutung, welche die Zeichentabelle 52 für "Schrägmosaik" wiedergeben.

In Fig. 9 ist auf die senkrechten Spalten "4", "5", "6" und "7" zu verweisen, welche die Zeichentabelle 54 mit den Zeichen der Liniengraphik und Schrägmosaik zeigen. Die beiden Spalten "6" und "7" zeigen die inversen Zeichen zu denjenigen gemäß den Spalten "4" und "5" in Fig. 8.

0136409

In Fig. 10 sind zwei Zeichensätze 56 (Tabellen GO und G2;
alphanumerische Zeichen) und 58 (Tabellen G1 und G3; Graphik- und Linienzeichen) dargestellt. Anhand dieser Fig.
läßt sich die umständliche und zeitraubende Eingabeprozedur
bei Graphik und Linienzeichen erläutern, wenn die Graphikeingabe über alphanumerische Tasten erfolgt.

Es sei angenommen, daß aus der Tabelle G1 das dritte graphische Zeichen von oben eingegeben werden soll. Zunächst
muß also das gewünschte Zeichen in der Tabelle G1 aufgesucht werden. Das am selben Platz in der Tabelle GO stehende alphanumerische Zeichen - hier also "R" - wird dann über
die Tastatur eingegeben. Das Zuordnen und Heraussuchen des
jeweils zugehörigen alphanumerischen Zeichens erfordert
aber einen erheblichen Zeitaufwand.

Demgegenüber ist bei der Erfindung gemäß den Figuren 11 -
16 den Graphik- und Linienzeichen jeweils eine dreifach-
Eingabe über den Tastenblock 30 zugeordnet, und zwar in der
Weise, daß die Bedienungsperson ohne größere Überlegung sofort das jeweilige Zeichen eingeben kann, weil die Zeichen
durch ihre Eckpunkte markiert bzw. definiert werden.

Es sei wieder auf das anhand von Fig. 10 erläuterte Beispiel zurückgegriffen, wo für die Eingabe des Mosaikzeichens
die Taste mit dem Buchstaben "R" betätigt werden mußte. Das
zugehörige Mosaikzeichen 60 befindet sich in Fig. 12. In
den Darstellungen gemäß Fig. 11 - 16 ist nun zu jedem Zeichen
durch einen Pfeil auf den zugehörigen Tastenblock (vergl.
Tastenblock 30 in Fig. 5) hingewiesen, wobei die Tasten hier
der Einfachheit halber durch Kreuze symbolisiert sind. Durch
einen Kreis um ein Kreuz ist angedeutet, daß diese Taste betätigt werden muß. Bei zwei Kreisen um ein Kreuz muß die
entsprechende Taste zweimal nacheinander betätigt werden (entsprechend bei drei Kreisen).

Um in Fig. 12 das erwähnte Zeichen 60 auf dem Bildschirm
darzustellen, werden im vorliegenden Fall also die drei
durch Kreise gekennzeichneten Tasten betätigt, das sind
die Tasten "6", "#" und "0".

Die Bedienungsperson braucht diesen "Code" nicht etwa auswendig zu lernen; vielmehr wird hier bei der Erfindung
durch die Eckpunkte des Zeichens vorgegeben, welche Tasten
des Tastenblocks 30 zu betätigen sind.

Nur in wenigen Ausnahmefällen muß eine Taste nacheinander
zweimal betätigt werden, etwa bei dem Zeichen 62 in Fig. 12,
weil dort eine eindeutige Markierung durch drei Eckpunkte
nicht ohne weiteres möglich ist. Trotzdem kann die Bedienungsperson anhand der "unmittelbaren" Tabelle gemäß Fig. 12
schneller als beim Stand der Technik erkennen, wie die Zuordnung erfolgt und welche Tasten er betätigen muß.

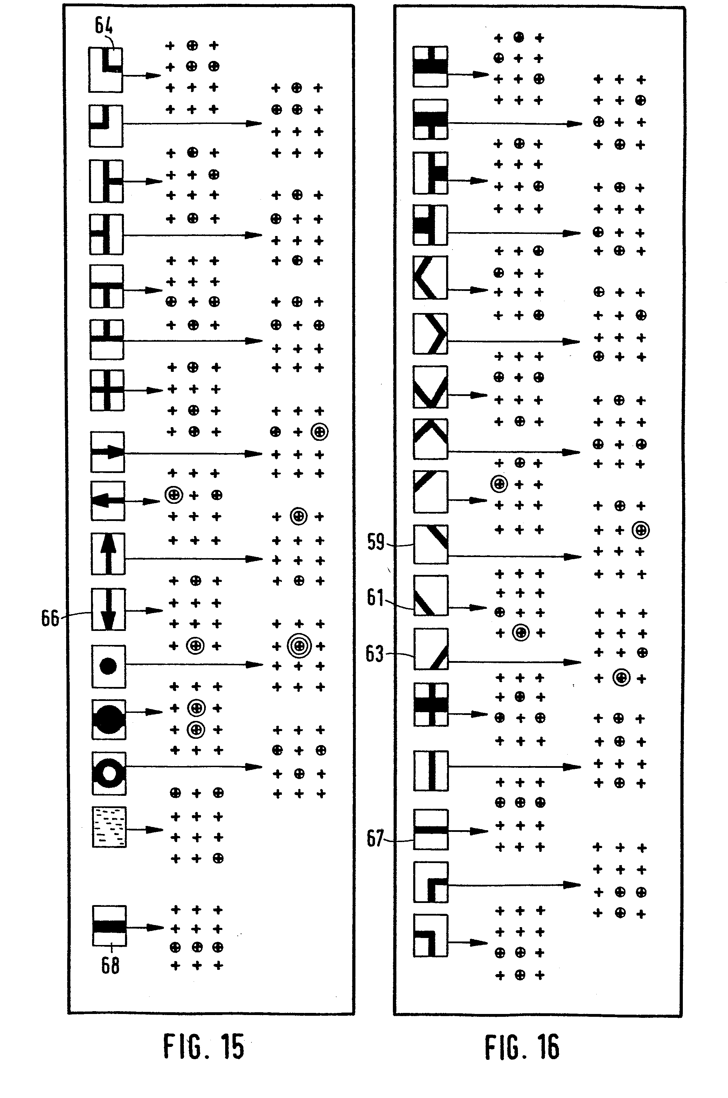

Auch bei den Linienzeichen gemäß den Figuren 15 und 16 wird
der Grundsatz beibehalten, daß jeweilige Zeichen durch Eckpunkte zu markieren. So läßt sich beispielsweise das Zeichen 64 oben in Fig. 15 ohne weiteres nachvollziehen und
über den Tastenblock eingeben.

Als Merkhilfe bei Pfeil-Symbolen gilt, daß die Pfeilspitze
zweimal markiert wird. So wird beispielsweise in Fig. 15
das Zeichen 66 wie folgt eingegeben: Taste "8" einmal und
Taste "0" zweimal betätigen.

Im übrigen liegt den Tabellen gemäß Fig. 15 und 16 die Überlegung zugrunde, bei dünnen waagerechten Linien die zweite
obere Reihe (Tasten "4", "5" und "6") und bei dicken Querlinien die zweite Reihe von unten (Tasten "1", "2" und "3") zu verwenden. Zur Verdeutlichung sei auf die Zeichen 67
in Fig. 16 und 68 in Fig. 15 hingewiesen.

Bei schrägen Linien, wie z.B. bei den Zeichen 59, 61 und
63, wird das jeweils untere Ende durch zweimaligen Tastendruck markiert. Bei dem Zeichen 61 in Fig. 16 wird also
folgende Tasteneingabe erfolgen: Taste "1" einmal und Taste
"0" zweimal.

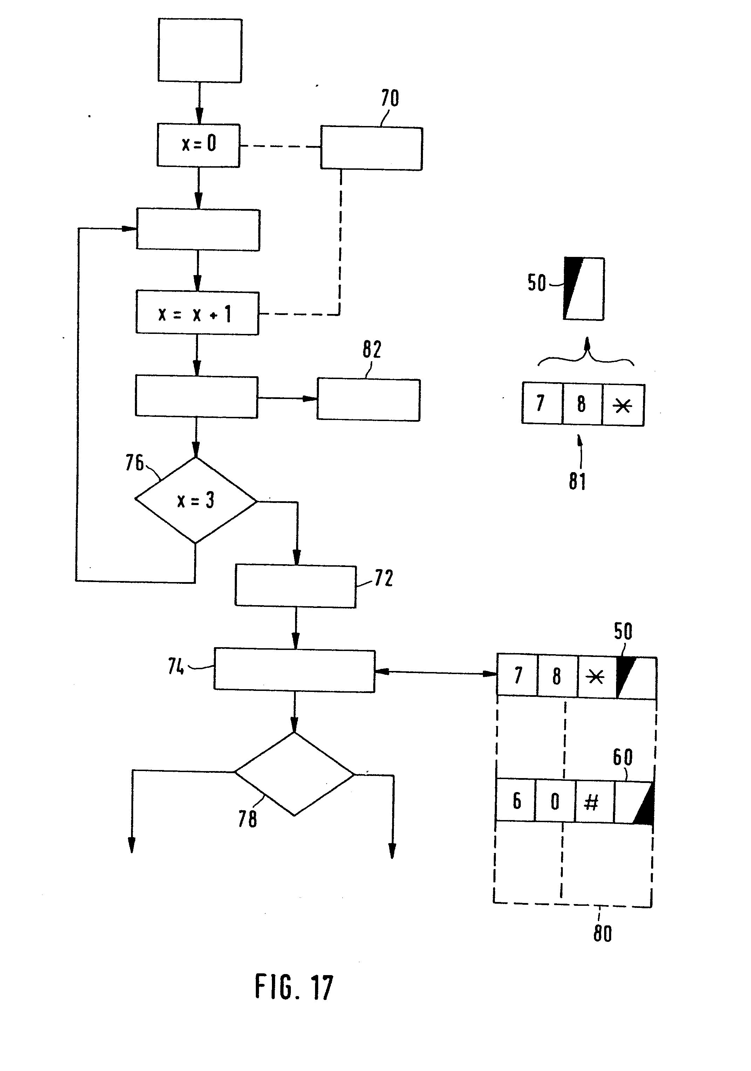

Anhand des in Fig. 17 dargestellten schematischen Blockdiagramms wird die Erfindung nachfolgend näher erläutert,
wenn über die Eingabeeinheit 10 unter Verwendung des Tastenblocks 30 eine "codierte" Eingabe von  Zeichen  aus den Tabellen "Schrägmosaik" und "Liniengraphik" erfolgt.

Die Eingabeeinheit 10 (vergleiche Fig. 1 und 2) besitzt einen
bis drei zählenden Zähler 70. Beim Start wird der Zähler 70
auf "0" gesetzt, wie durch den Kasten "x = 0" angedeutet ist.

Nach der Eingabe eines ersten Identifikationsbefehles, wenn
also eine der zwölf Tasten des Tastenblocks 30 betätigt wurde, wird der Zählerstand des Zählers 70 auf "1" gesetzt, wie
durch den Kasten mit der Beschriftung "x = x + 1" angedeutet
ist.

Gleichzeitig wird das der gedrückten Taste zugeordnete Identifikationssignal - also ein Markierungspunkt gemäß der Darstellung in Fig. 4 - in einen Puffer 82 gegeben. Der Puffer
82 besitzt hier drei Speicherplätze, und es sei angenommen,
daß bei der Eingabe als erstes die Taste "7" betätigt wurde.
Der erste Speicherplatz des Puffers 82 wird dann mit dem der
Taste "7" zugeordneten Identifikationssignal belegt.

Es folgt als nächstes eine Überprüfung der Anzahl der betätigten Tasten. Durch die Raute 76 "x = 3" wird verdeutlicht, daß der Zugang zu einem Sortierer 72 erst dann freigegeben wird, wenn drei Tasteneingaben erfolgt sind.

Im vorliegenden Fall sei angenommen, daß das in Fig. 6
schon erläuterte Zeichen 50 eingegeben und dargestellt werden soll. Es müssen also die Tasten "7", "8" und "*" betätigt werden. Der sich dann ergebende Speicherinhalt des
Puffers 82 auf den zugehörigen drei Speicherplätzen ist
in dem Block 81 gezeigt.

Nachdem drei einzelne Tasteneingaben getätigt worden und
der Zähler 70 den Zählerstand "3" erreicht hat, wird der
Speicherinhalt des Puffers 82 einem Sortierer 72 zugeführt. Hier werden die eingegebenen Identifikationsbefehle in eine richtige Reihenfolge sortiert. Es ist nämlich bei der Eingabe über den Tastenblock selbst unerheblich, in welcher Reihenfolge die jeweils drei Tasten
betätigt werden.

An den Sortierer 72 schließt sich ein Vergleicher 74 an,
der den sortierten Speicherinhalt des Puffers 82 mit der
in einem Speicher 80 befindlichen Tabelle vergleicht. In
dem Speicher 80 sind in Form einer Tabelle die Zuordnungen
gemäß den Figuren 11 - 16 gespeichert.

In dem erwähnten Beispiel erkennt der Vergleicher 74 in
dem Speicher 80 daß den drei Tasten "7", "8" und "*" zugeordnete graphische Zeichen 50. Wie durch die Raute 78
angegeben ist, wird nach Erkennung das Zeichen 50 ausgegeben und auf dem Bildschirm dargestellt. Für den Fall,
daß die Bedienungsperson irrtümlich eine falsche Eingabe getätigt hat, also drei Tasten betätigt wurden, denen kein Zeichen zugeordnet ist, kann keine Erkennung erfolgen. In diesem Fall wird auf dem Bildschirm die Angabe "Fehler" sichtbar, z. B. in Form eines umgekehrten Fragezeichens.

Zur Verdeutlichung des Aufbaues des Speichers 80 ist in der gezeigten Tabelle auch noch das Zeichen 60 aus Fig. 12 mit aufgenommen. Bei Betätigung der Tasten "6", "0" und "#" - in beliebiger Reihenfolge - würde also das Zeichen 60 auf dem Bildschirm des Monitors dargestellt werden.

BLAUPUNKT-WERKE GMBH
3200 Hildesheim


P a t e n t a n s p r ü c h e

1.     Verfahren zum Erstellen von Bildschirmtext
(Btx)-Seiten unter Verwendung der in den Zeichentabellen
für "Schrägmosaik" und "Liniengraphik" enthaltenen Zeichen,
mit einer Eingabeeinheit mit einer Tastatur, deren Tasten
zum Zwecke der Eingabe eines Zeichens betätigt werden, dadurch gekennzeichnet, daß jedes Zeichen (50) aus den Tabellen "Schrägmosaik" (52) und "Liniengraphik" (54) aus
mindestens drei einzelnen Tasteneingaben bzw. Tastenbetätigungen zusammengesetzt und aufgebaut wird.

2.     Verfahren nach Anspruch 1, dadurch gekennzeichnet,
daß jedes Zeichen (50) aus den Tabellen "Schrägmosaik" (52)
und "Liniengraphik" (54) durch drei Markierungspunkte
( 0, 1, 2, 3 .....) bzw. diesen zugeordneten elektrischen
Signalen definiert wird.

3.     Verfahren nach Anspruch 1 oder 2, dadurch gekennzeichnet, daß durch die drei einzelnen Tasteneingaben die
Eckpunkte (0, 1, 2, 3 ....) der Zeichen des Zeichensatzes
der Tabelle "Schrägmosaik" (52) markiert werden.

4.     Verfahren nach einem der Ansprüche 1 - 3, wobei die
maximale Zeichengröße entsprechend der Norm durch sechs
Segmente bestimmt ist (zwei senkrechte Reihen mit je drei
Segmenten), dadurch gekennzeichnet, daß den insgesamt zwölf

Eck- bzw. Kreuzpunkten der Segmente zwölf einzelne Tasten
(0, 1, 2, 3 ....) für die Eingabe der möglichen zwölf
Markierungspunkte zugeordnet werden.

5.      Eingabeeinheit zur Durchführung des Verfahrens,
mit einer Vielzahl von Tasten, gekennzeichnet durch einen
aus zwölf Tasten bestehenden Tastenblock (30).  .

6.      Eingabeeinheit nach Anspruch 4, dadurch gekennzeichnet, daß der Tastenblock (30) durch ein Tastenfeld von
drei ( in der Waagerechten) mal vier ( in der Senkrechten)
Tasten (0, 1, 2, 3 ....) gebildet ist.  .

7.      Eingabeeinheit nach Anspruch 5 oder 6, dadurch
gekennzeichnet, daß der Tastenblock (30) zusätzlich zu den
anderen Tasten (26, 28) der Eingabeeinheit (10) vorgesehen
ist.

8.      Eingabeeinheit nach Anspruch 6, dadurch gekennzeichnet, daß die einzelnen Tasten so angeordnet sind,
daß sie in ihrer jeweiligen örtlichen Lage den Eck- bzw.
Kreuzpunkten (0, 1, 2, 3 ....) der Segmente ( 38, 40, 42,
44, 46, 48) des Zeichenfeldes (36) für die Zeichendarstellung entsprechen.

9.      Eingabeeinheit nach einem der vorhergehenden Ansprüche 5 - 8, dadurch gekennzeichnet, daß die Eingabeeinheit (10) einen Umschalter (11) besitzt, welcher den
Tastenblock (30) für eine Eingabe  von Zeichen (50) aus
der Tabelle "Schrägmosaik" (52) oder "Liniengraphik" (54)
aktiviert.

10.     Eingabeeinheit nach einem der vorhergehenden Ansprüche 5 - 9, dadurch gekennzeichnet, daß die Eingabe-

- 3 -

0136409

einheit (10) einen Sortierer (72) umfaßt, welcher die den einzelnen nacheinander gedrückten Tasten zugeordneten Identifikationssignale in richtiger Reihenfolge ordnet.

11. Eingabeeinheit nach einem der vorhergehenden Ansprüche 5 - 10, dadurch gekennzeichnet, daß die Eingabeeinheit (10) einen bis drei zählenden Zähler (70) besitzt, der die Anzahl der bei einer Eingabe nacheinander betätigten Tasten des Tastenblocks (30) zählt.

12. Eingabeeinheit nach einem der vorhergehenden Ansprüche 5 - 11, dadurch gekennzeichnet, daß die Eingabeeinheit (10) einen Vergleicher (74) und einen Speicher (80) besitzt, um die eingegebenen und sortierten jeweils drei Identifikationssignale mit den im Speicher (80) vorhandenen, einem Zeichen (50) zugeordneten Kennungsgrößen zu vergleichen, wobei jedem Zeichen (50) aus den Zeichensätzen der Tabellen "Schrägmosaik" (52) und "Liniengraphik" (54) jeweils drei einzelne Kennungsgrößen zugeordnet sind.

FIG.1

FIG.2

0136409

R.Nr. 1785

FIG.3

FIG.4

FIG.5

FIG.6

FIG.7

0136409
R.Nr. 1785

FIG.8

FIG. 9

0136409

R.Nr. 1785

FIG.10

FIG. 11

FIG. 12

FIG. 13

FIG. 14

R.Nr. 1785
0136409

**FIG. 15**

**FIG. 16**

0136409

R.Nr. 1785

FIG. 17